# EUROPÄISCHE PATENTSCHRIFT

(11) **EP 0 659 688 B1**
(45) Veröffentlichungstag und Bekanntmachung des Hinweises auf die Patenterteilung: **29.01.1997**
(21) Anmeldenummer: 94119606.5
(22) Anmeldetag: 12.12.1994
(51) Int. Cl.: C01G 23/053, C22B 34/12

(54) **Verfahren zur Herstellung von Titandioxid nach dem Sulfatverfahren**
Process for the preparation of titanium dioxide by the sulphate process
Procédé de préparation de dioxyde de titane selon le procédé sulfate

(30) Priorität: 23.12.1993 DE 4344162
(43) Veröffentlichungstag der Anmeldung: 28.06.1995
(73) Patentinhaber: BAYER AG, 51368 Leverkusen (DE)
(72) Erfinder: Thometzek, Peter, Dr., D-47800 Krefeld (DE); Linde, Günter, Dr., D-47800 Krefeld (DE)

(56) Entgegenhaltungen:
- EP-A- 0 031 064
- EP-A- 0 475 104
- US-A- 4 288 415

## Beschreibung

Die Erfindung betrifft ein Verfahren zur Herstellung von Titandioxid durch Aufschluß von Aufschlußrückstanden aus der Titandioxidproduktion und gegebenenfalls Ilmenit mit Schwefelsäure.

Beim Sulfatverfahren zur Produktion von Titandioxid wird Ilmenit und/oder Schlacke mit Schwefelsäure aufgeschlossen (Ullmanns Encyclopädie der technischen Chemie, 4. Aufl., Band 18, S. 574 ff.). Der Aufschluß wird batchweise oder kontinuierlich durchgeführt. Nach dem Auflösen des dabei entstehenden Kuchens wird der ungelöste Rückstand über Eindicker, Drehfilter bzw. Filterpressen gegebenenfalls mit Filterhilfsmitteln abgetrennt und deponiert.

Die darin noch enthaltenen 20 - 60 Gew.-% an ungelöstem TiO₂ werden unter üblichen Bedingungen nicht aufgeschlossen und gehen damit dem Herstellungsprozeß verloren.

Verfahren zur Aufarbeitung von derartigen Aufschlußrückständen aus der Titandioxid-Produktion nach dem Sulfatverfahren sind bekannt. So wird in DE-A 2 951 749 beschrieben, den anfallenden Aufschlußrückstand mit Schlacke abzumischen und wieder in den Aufschlußprozeß zurückzuführen. Dabei gelingt es, gemeinsam mit Schlacke noch weiteres TiO₂ aus dem Rückstand herauszulösen. Von Nachteil ist jedoch, daß die Gesamtausbeute beim Aufschluß und damit die Kapazität verringert wird Darüber hinaus wird auf diese Weise Aufschlußrückstand im Aufschluß angereichert, was zu Schwierigkeiten bei der Prozeßführung führt.

In den Beispielen aus DE-A 2 951 749, in denen nach den beschriebenen Verfahren 35 - 60 % Aufschlußrückstand und 40 - 65 % Ilmenit mit Schwefelsäure aufgeschlossen werden, wurden lediglich Aufschlußgrade von 28 - 73 % TiO₂ erhalten.

In der deutschen Patentschrift 952 711 wird der kontinuierliche Aufschluß von Ilmenit und bis zu 50 % Aufschlußrückstand mit Schwefelsäure in einer Schnecke in einem zweistufigen Verfahren beschrieben. TiO₂-Aufschlußgrade werden nicht erwähnt. Die Reaktion verläuft ohne Energiezufuhr von außen ab. Da der Ilmenitanteil 50 % oder mehr beträgt, geht bei diesem Verfahren mindestens die Hälfte des eingesetzten Ilmenits der TiO₂-Rückgewinnung im erneuten Aufschluß verloren. Das Verfahren ist daher für eine großtechnische TiO₂-Rückstandsaufarbeitung nicht geeignet.

Eine andere Möglichkeit, TiO₂ aus Rückständen zu gewinnen besteht darin, den Aufschlußrückstand durch Mischen mit Schwefelsäure unter Energiezufuhr separat aufzuschließen (DE-A 4 027 105). Die erhaltene Aufschlußmasse wird mit Wasser verdünnt und dann nach den üblichen Bedingungen des Sulfatprozesses weiterverarbeitet. Der Nachteil dabei ist, daß die hergestellten Suspensionen schwer filtrierbar sind und die Hydrolyse sich schlecht kontrollieren läßt. Ein weiterer Nachteil ist, daß hohe Aufschlußgrade lediglich bei niedrigen Temperaturen und gleichzeitig hohen Reaktionszeiten (3 bis 6 Stunden) erhalten werden. Der Aufschluß erfolgt in gerührten Behältern im Batch-Betrieb bei bevorzugten Temperaturen von 140° bis 250°C. Höhere Temperaturen führen zu deutlichen Ausbeuteverlusten.

Aufgabe der vorliegenden Erfindung war es, ein Verfahren zur Herstellung von Titandioxid zur Verfügung zu stellen, mit dem es gelingt, das im Aufschlußrückstand noch vorhandene Titan möglichst vollständig aus diesem herauszulösen, so daß es in einer Form vorliegt, die zu Titandioxid weiterverarbeitet werden kann.

Diese Aufgabe konnte durch das erfindungsgemäße Verfahren gelöst werden.

Gegenstand der Erfindung ist ein Verfahren zur Herstellung von Titandioxid nach dem Sulfatverfahren durch kontinuierlichen Aufschluß von Titanrohstoffen mit Schwefelsäure unter Bildung eines Aufschlußkuchens mit anschließender Reifung des Aufschlußkuchens, Lösen des Aufschlußkuchens unter Bildung einer Titanylsulfatlösung, gegebenenfalls Abtrennen der nicht gelösten Feststoffe, Hydrolyse der Titanylsulfatlösung unter Bildung von Titanoxidhydrat und Dünnsäure, Kalzinieren des Titanoxidhydrates zu Titandioxid, welches dadurch gekennzeichnet ist, daß als Titanrohstoff ein Gemisch aus 55 - 100 Gew.-% eines titanhaltigen Aufschlußrückstandes aus der Titandioxidproduktion nach dem Sulfatverfahren und 0 - 45 Gew.-% eines feinteiligen Titanerzes, insbesondere Ilmenit, eingesetzt wird, der Aufschluß bei Temperaturen von 220° bis 350°C durchgeführt wird, die Reifung bei einer Temperatur zwischen > 300 ° und 550°C und Verweilzeiten zwischen 15 Minuten und 3 Stunden erfolgt und das Lösen des Aufschlußkuchens unter Zusatz eines Reduktionsmittels erfolgt.

Der Aufschluß kann sowohl mit titanhaltigem Aufschlußrückstand aus der Titandioxidproduktion nach dem Sulfatverfahren allein wie mit einem Gemisch aus 55-95 Gew.-%, vorzugsweise 70-90 Gew.-%, Aufschlußrückstand und 5-45 Gew.-%, vorzugsweise 10-30 Gew.-% eines feinteiligen Titanerzes, insbesondere Ilmenit, erfolgen.

Der Aufschluß wird vorzugsweise kontinuierlich in einem Schneckenreaktor durchgeführt, während die Reifung kontinuierlich in einem Drehrohr erfolgt.

Als Aufschlußrückstand wird bevorzugt Material vom Eindickerunterlauf Drehfilterabwurf, Filterpressenabwurf und/oder Material aus der Feinfiltration eingesetzt.

Als Schwefelsäure werden beim Aufschluß wie allgemein auch üblich frische 94 - 99 gew.-%ige Schwefelsäure, Oleum, aufkonzentrierte, rezyklierte Dünnsäure oder Gemische davon eingesetzt.

Das Gewichtsverhältnis von TiO₂ aus Aufschlußrückstand und Ilmenit zu H₂SO₄ aus Schwefelsäure, Oleum und aufkonzentrierter Dünnsäure ist vor dem Aufschluß vorzugsweise wie 1:1,5 bis 1:3,5.

Als Reduktionsmittel wurden bevorzugt ein oder mehrere Metalle aus der Gruppe Eisen, Aluminium und Zink eingesetzt.

Es wird vorzugsweise soviel Reduktionsmittel eingesetzt, daß in der Titanylsulfatlösung ein Titan(III)-Gehalt von 0,1 bis 4 g/l, besonders bevorzugt 0,5 bis 2,0 g/l, gerechnet als TiO₂, vorliegt.

Durch das erfindungsgemäße Verfahren wird die Menge des zu deponierenden Rückstandes um ca. 40 - 60 % vermindert. Es werden zusätzlich über 80 Gew.-% des Titans aus den Aufschlußrückständen gewonnen.

Als Titanerz wird vorzugsweise feinteiliger Ilmenit eingesetzt. Dieser enthält einen Feinkornanteil unter 40 µm in einer Menge größer als 70 Gew.-%.

Die Erfindung soll anhand der nachfolgenden Beispiele naher erläutert werden.

### Beispiel 1

Aus 50 Gew.-% Drehfilterabwurf, der aus der Aufschlußsuspension der TiO₂-Produktion stammt und einen Feststoffgehalt von 53 Gew.-% mit einem TiO₂-Anteil von 50 Gew.-%, bezogen auf den Feststoffgehalt, besitzt, 10 Gew.-% feinteiligem Ilmenit (80 % unter 40 Mikron, TiO₂-Gehalt ca. 45 Gew.-%) und 40 Gew.-% 96 %iger Schwefelsäure wird eine Suspension hergestellt (Gewichtsverhältnis Rückstand : Ilmenit = 83,3 : 16,7; TiO₂ : H₂SO₄-Verhältnis = 1:2,2) und einem kontinuierlich betriebenen Schneckenreaktor zugeführt.

Das Produkt erfahrt Temperaturen von über 250°C (Heiztemperatur 350°C; gemessene Temperatur am äußeren Umfang der Schnecke 280°C); die Verweilzeit liegt bei ca. 1 Stunde. Anschließend wird das erhaltene, trockene, krümelige Material 1 Stunde zur Reifung in einer Drehbirne bei 320°C behandelt. Nach Zugabe von Lösewasser und 2,5 Gew.-% feinem Eisenpulver, bezogen auf die Nachaufschlußmasse, rührt man mehrere Stunden bei 70°C. Der unlösliche Rückstand wird abfiltriert und der Titangehalt in Lösung und im zurückbleibenden Feststoff, gerechnet als TiO₂, nach den üblichen, naßchemischen Methoden ermittelt. Hieraus ergibt sich ein TiO₂-Gesamtaufschlußgrad von 85 Gew.-%. Bezogen auf den Rückstand allein beträgt die TiO₂-Ausbeute 82,8 Gew.-%.

Anschließend wird die Lösung wie üblich weiterverarbeitet und TiO₂ hergestellt.

### Vergleichsbeispiel 1

Der Versuch wird wie in Beispiel 1 durchgeführt, allerdings erfolgt die Reifung im Drehrohrofen bei lediglich 170°C bei doppelter Reifezeit von 2 Stunden. Die Aufarbeitung erfolgt wiederum unter Zusatz von 2 Gew.-% Eisenpulver. Der TiO₂-Aufschlußgrad liegt nur bei 77 Gew.-%.

### Beispiel 2

Aus Drehfilterabwurf, der aus der Aufschlußsuspension der TiO₂-Produktion stammt und einen Feststoffgehalt von 53 Gew.-% mit einem TiO₂-Anteil von 53 Gew.-%, bezogen auf Feststoff bzw. 28 Gew.-%, bezogen auf den Filterkuchen, besitzt, wird mit 96 %iger Schwefelsäure eine Suspension mit einem Gewichtsverhältnis TiO₂ zu H₂SO₄ von 1:1,8 hergestellt und einem kontinuierlich betriebenen Schneckenreaktor zugeführt. Die Produktemperatur im Innern des Reaktors beträgt etwa 280°C, die Verweilzeit liegt bei ca. 1 Stunde. Anschließend wird das erhaltene, krümelige Material 1 Stunde in einer Drehbirne bei 310°C behandelt.

Nach Zugabe von Lösewasser und 2 Gew.-% feinem Eisenpulver, bezogen auf die Aufschlußmasse, rührt man mehrere Stunden bei 70°C. Der unlösliche Rückstand wird abfiltriert und der Titangehalt in Lösung und im zurückbleibenden Feststoff, gerechnet als TiO₂, nach den üblichen, naßchemischen Methoden ermittelt. Hieraus ergibt sich ein TiO₂-Aufschlußgrad von 87 Gew.-%.

### Vergleichsbeispiel 2a

Unter gleichen Bedingungen wie in Beispiel 2, allerdings ohne die Eisenpulverzugabe beim Lösevorgang, liegt der TiO₂-Aufschlußgrad bei lediglich 55 Gew.-%. Die Suspension ist schlecht filtrierbar.

### Vergleichsbeispiel 2b

Der Aufschluß erfolgt wie in Beispiel 2, die Reifung wird allerdings bei nur 170°C und bei doppelter Reifezeit von 2 Stunden durchgeführt. Der Lösevorgang erfolgt wie in Beispiel 2 unter Zusatz von 2 Gew.-% Eisen. Der TiO₂-Aufschlußgrad liegt bei 78 Gew.-%.

### Vergleichsbeispiel 2c

Es wird wie in Beispiel 2 vorgegangen, die Reifung erfolgt bei 210°C und 1 Stunde. Der Lösevorgang wird mit 2 Gew.-% Eisen durchgeführt. Der TiO₂-Aufschlußgrad liegt bei 81 Gew.-%.

### Beispiel 3

Aus dem Drehfilterabwurf wie in Beispiel 2 wird mit 96 gew.-%iger Schwefelsäure eine Suspension mit einem Gewichtsverhältnis von TiO₂ zu H₂SO₄ von 1:1,2 hergestellt und einem kontinuierlich betriebenen Schneckenreaktor zugeführt. Über eine separate Eintragsöffnung der Schnecke wird gleichzeitig eine Menge an 27 %igem Oleum zudosiert, so daß sich ein Verhältnis von TiO₂ zu H₂SO₄ von 1:2,0 ergibt. Die Produkttemperatur im Innern der Anlage beträgt etwa 280°C, die Verweilzeit liegt bei ca. 1 Stunde. Das erhaltene, krümelige Material wird anschließend 2 Stunden bei 310°C in einem Drehrohr gereift.

Nach Zugabe von Lösewasser und 2 Gew.-% Eisenpulver, bezogen auf die Kuchenmasse, wird bei 70°C mehrere Stunden gerührt, filtriert und auf Titan analysiert. Man erhält einen TiO₂-Aufschlußgrad von 93 Gew.-%.

### Vergleichsbeispiel 3a

Unter gleichen Bedingungen wie in Beispiel 3, allerdings ohne Eisenzugabe beim Lösevorgang, liegt der TiO₂-Aufschlußgrad bei 53 Gew.-%.

### Vergleichsbeispiel 3b

Der Aufschluß erfolgt wie in Beispiel 3, aber ohne Reifung. Der Lösevorgang erfolgt unter 2 Gew.-% Eisenzusatz. Der TiO₂-Aufschlußgrad liegt bei 75 Gew.-%.

### Beispiel 4

Die Aufschlußsuspension aus der TiO₂-Produktion wird über eine Membranfilterpresse filtriert. Man erhält einen Filterkuchen mit einem Feststoffgehalt von 68 Gew.-% und einem TiO₂-Anteil von 40 Gew.-%, bezogen auf den Filterkuchen.

39 Gew.-% dieses Filterkuchens werden mit 9 Gew.-% feinteiligem Ilmenit (TiO₂-Gehalt ca. 45 %; Gewichtsverhältnis Rückstand zu Ilmenit = 81,3 : 18,7) und 52 Gew.-% Schwefelsäure aus der Dünnsäureaufarbeitung, die eine Konzentration von ca. 74 Gew.-% und einen Salzgehalt von ca. 6 Gew.-% aufweist, im Gewichtsverhältnis TiO₂ : H₂SO₄ von 1:1,87 gemischt und einem kontinuierlich betriebenen Schneckenreaktor zugeführt. Die Produkttemperatur im Innern des Reaktors beträgt etwa 280°C, die Verweilzeit liegt bei ca. 1 Stunde. Anschließend wird das Material 1 Stunde in einer Drehbirne bei 320°C gereift.

Nach Zugabe von Lösewasser und 2,5 Gew.-% Eisenpulver, bezogen auf die Nachaufschlußmasse, rührt man mehrere Stunden bei 75°C. Nach Filtration ergibt sich ein Gesamt-TiO₂-Aufschlußgrad von 88 Gew.-% in der erhaltenen Schwarzlösung. Bezogen auf den Rückstand allein ergibt sich ein TiO₂-Aufschlußgrad von 87,4 Gew.-%.

### Beispiel 5

Die Aufschlußsuspension aus der TiO₂-Produktion wird über eine Membranfilterpresse filtriert. Man erhält einen Rückstand mit einem Feststoffgehalt von 68 Gew.-% und einem TiO₂-Anteil von 40 Gew.-%, bezogen auf den Filterkuchen. Dieser Rückstand wird mit aufkonzentrierter Dünnsäure, die eine Konzentration von ca. 74 Gew.-% H₂SO₄ und einen Salzgehalt von ca. 6 Gew.-% aufweist, im Gewichtsverhältnis von TiO₂ zu H₂SO₄ von 1:1,8 gemischt und einem kontinuierlich betriebenen Schneckenreaktor zugeführt. Die Produkttemperatur im Innern des Reaktors beträgt etwa 280°C, die Verweilzeit liegt bei ca. 1 Stunde. Anschließend wird das Material 1 Stunde in einer Drehbirne bei 310°C gereift.

Nach Zugabe von Lösewasser und 2 % Eisenpulver, bezogen auf die Nachaufschlußmasse, rührt man mehrere Stunden bei 70°C. Nach Filtration ergibt sich ein TiO₂-Aufschlußgrad von 90 Gew.-% in der erhaltenen Schwarzlösung.

## Patentansprüche

1. Verfahren zur Herstellung von Titandioxid nach dem Sulfatverfahren durch kontinuierlichen Aufschluß von Titanrohstoffen mit Schwefelsäure unter Bildung eines Aufschlußkuchens mit anschließender Reifung des Aufschlußkuchens, Lösen des Aufschlußkuchens unter Bildung einer Titanylsulfatlösung, gegebenenfalls Abtrennen der nicht gelösten Feststoffe, Hydrolyse der Titanylsulfatlösung unter Bildung von Titanoxidhydrat und Dünnsäure, Kalzinieren des Titanoxidhydrates zu Titandioxid, dadurch gekennzeichnet, daß als Titanrohstoff ein Gemisch aus 55 - 100 Gew.-% eines titanhaltigen Aufschlußrückstandes aus der Titandioxidproduktion nach dem Sulfatverfahren und 0 - 45 Gew.-% eines feinteiligen Titanerzes, insbesondere Ilmenit, eingesetzt wird, der Aufschluß bei Temperaturen von 220°C bis 350°C durchgeführt wird, die Reifung bei einer Temperatur zwischen > 300° und 550°C und Verweilzeiten zwischen 15 Minuten und 3 Stunden erfolgt und das Lösen des Aufschlußkuchens unter Zusatz eines Reduktionsmittels erfolgt.

2. Verfahren nach Anspruch 1, dadurch gekennzeichnet, daß als Titanrohstoff ein Gemisch aus 55 - 95 Gew.-%, vorzugsweise 70 bis 90 Gew.-%, eines titanhaltigen Aufschlußrückstandes aus der Titandioxidproduktion nach dem Sulfatverfahren und 5 - 45 Gew.-%, vorzugsweise 10 bis 30 Gew.-%, eines feinteiligen Titanerzes, insbesondere Ilmenit, eingesetzt wird.

3. Verfahren nach Anspruch 1, dadurch gekennzeichnet, daß als Titanrohstoff ein titanhaltiger Aufschlußrückstand aus der Titandioxidproduktion nach dem Sulfatverfahren eingesetzt wird.

4. Verfahren nach einem oder mehreren der Ansprüche 1 bis 3, dadurch gekennzeichnet, daß der Aufschluß kontinuierlich in einem Schneckenreaktor erfolgt und die Reifung kontinuierlich in einem Drehrohr.

5. Verfahren nach einem oder mehreren der Ansprüche 1 bis 4, dadurch gekennzeichnet, daß als Aufschlußrückstand Material vom Eindickerunterlauf, Drehfilterabwurf, aus der Feinfiltration und/oder vom Filterpressenabwurf eingesetzt wird.

6. Verfahren nach einem oder mehreren der Ansprüche 1 bis 5, dadurch gekennzeichnet, daß als Schwefelsäure frische 94 - 99 gew.-%ige Schwefelsäure, Oleum, aufkonzentrierte, rezyklierte Dünnsäure oder Gemische davon eingesetzt werden.

7. Verfahren nach einem oder mehreren der Ansprüche 1 bis 6, dadurch gekennzeichnet, daß vor Aufschluß ein Gewichtsverhältnis von TiO₂ aus Aufschlußrückstand und Ilmenit zu H₂SO₄ aus Schwefelsäure, Oleum und aufkonzentrierter Dünnsäure wie 1:1,5 bis 1:3,5 eingestellt wird.

8. Verfahren nach einem oder mehreren der Ansprüche 1 bis 7, dadurch gekennzeichnet, daß als Reduktionsmittel ein oder mehrere Metalle aus der Gruppe Eisen, Aluminium und Zink eingesetzt werden.

9. Verfahren nach einem oder mehreren der Ansprüche 1 bis 8, dadurch gekennzeichnet, daß soviel Reduktionsmittel eingesetzt wird, daß in der Titanylsulfatlösung ein Titan(III)-Gehalt von 0,1 bis 4 g/l, vorzugsweise 0,5 bis 2,0 g/l, gerechnet als TiO₂, vorliegt.

## Claims

1. A process for producing titanium dioxide by the sulphate process by continuous digestion of titanium raw material with sulphuric acid with the formation of a digestion cake, with subsequent maturation of the digestion cake, dissolution of the digestion cake with the formation of a titanyl sulphate solution, optionally separation of undissolved solids, hydrolysis of the titanyl sulphate solution with the formation of titanium oxide hydrate and dilute acid and calcination of the titanium oxide hydrate to give titanium dioxide, characterised in that a mixture of 55 - 100 wt.% of a titanium-containing digestion residue from the production of titanium dioxide by the sulphate process and 0 - 45 wt.% of a finely divided titanium ore, in particular ilmenite, is used as titanium raw material, digestion is performed at temperatures of 220°C to 350°C, maturation takes place at a temperature between >300°C and 550°C with residence times between 15 minutes and 3 hours and dissolution of the digestion cake takes place with the addition of a reducing agent.

2. A process according to Claim 1, characterised in that a mixture of 55 - 95 wt.%, preferably 70 to 90 wt.%, of a titanium-containing digestion residue from titanium dioxide production by the sulphate process and 5 - 45 wt.%, preferably 10 to 30 wt.%, of a finely divided titanium ore, in particular ilmenite, is used as titanium raw material.

3. A process according to Claim 1, characterised in that a titanium-containing digestion residue from titanium dioxide production by the sulphate process is used as titanium raw material.

4. A process according to one or more of Claims 1 to 3, characterised in that digestion is performed continuously in a screw reactor and maturation takes place continuously in a revolving tube.

5. A process according to one or more of Claims 1 to 4, characterised in that material from the thickener underflow, rotary filter discharge, from fine filtration and/or from filter press discharge is used as digestion residue material.

6. A process according to one or more of Claims 1 to 5, characterised in that freshly prepared 94 - 99 wt.% strength sulphuric acid, oleum, concentrated, recycled dilute acid or mixtures thereof are used as sulphuric acid.

7. A process according to one or more of Claims 1 to 6, characterised in that before digestion the ratio by weight of TiO₂ from the digestion residue and ilmenite to H₂SO₄ from sulphuric acid, oleum and concentrated dilute acid is adjusted to a value of 1:1.5 to 1:3.5.

8. A process according to one or more of Claims 1 to 7, characterised in that one or more metals from the group consisting of iron, aluminium and zinc are used as reducing agent.

9. A process according to one or more of Claims 1 to 8, characterised in that enough reducing agent is used for the titanium(III)-content of the titanyl sulphate solution to be 0.1 to 4 g/l, preferably 0.5 to 2.0 g/l, calculated as TiO₂.

## Revendications

1. Procédé pour la préparation du dioxyde de titane par le procédé au sulfate avec attaque continue de matières premières titanifères par l'acide sulfurique donnant un gâteau d'attaque qu'on soumet ensuite à maturation, dissolution du gâteau d'attaque avec formation d'une solution de sulfate de titanyle, le cas échéant séparation des matières solides non dissoutes, hydrolyse de la solution de sulfate de titanyle avec formation d'un oxyde de titane hydraté et d'un acide dilué, calcination de l'oxyde de titane hydraté en dioxyde de titane, ce procédé se caractérisant en ce que l'on utilise en tant que matière première titanifère un mélange de 55 à 100% en poids d'un résidu d'attaque, contenant du titane, provenant de la production industrielle du dioxyde de titane par le procédé au sulfate, et de 0 à 45% en poids d'un minerai de titane en fines particules, plus spécialement de l'ilménite, on procède à l'attaque à des températures de 220 à 350°C et on réalise la maturation à une température supérieure à 300°C atteignant 550°C au maximum dans des durées de 15 minutes à 3 heures et on dissout le gâteau d'attaque avec adjonction d'un agent réducteur.

2. Procédé selon la revendication 1, caractérisé en ce que l'on utilise en tant que matière première titanifère un mélange de 55 à 95% en poids, de préférence de 70 à 90% en poids, d'un résidu d'attaque, contenant du titane, de la production industrielle du dioxyde de titane par le procédé au sulfate, et de 5 à 45% en poids, de préférence 10 à 30% en poids, d'un minerai de titane en fines particules, plus spécialement de l'ilménite.

3. Procédé selon la revendication 1, caractérisé en ce que l'on utilise en tant que matière première titanifère un résidu d'attaque, contenant du titane, de la production industrielle du dioxyde de titane par le procédé au sulfate.

4. Procédé selon une ou plusieurs des revendications 1 à 3, caractérisé en ce que l'attaque est réalisée en continu dans un réacteur à vis et la maturation est réalisée en continu dans un tube rotatif.

5. Procédé selon une ou plusieurs des revendications 1 à 4, caractérisé en ce que les résidus d'attaque mis en oeuvre sont des matières provenant du courant inférieur d'un concentrateur, des rejets d'un filtre rotatif, de la filtration fine et/ou de filtre-presse.

6. Procédé selon une ou plusieurs des revendications 1 à 5, caractérisé en ce qu'on utilise en tant qu'acide sulfurique de l'acide sulfurique frais à une concentration de 94 à 99% en poids, de l'oléum, de l'acide dilué reconcentré et recyclé, ou un mélange de tels acides.

7. Procédé selon une ou plusieurs des revendications 1 à 6, caractérisé en ce que, avant l'attaque, on règle à un niveau de 1 : 1,5 à 1 : 3,5 le rapport en poids entre le TiO₂ du résidu d'attaque et de l'ilménite d'une part et le H₂SO₄ de l'acide sulfurique, de l'oléum et de l'acide dilué reconcentré d'autre part.

8. Procédé selon une ou plusieurs des revendications 1 à 7, caractérisé en ce qu'on utilise en tant qu'agent réducteur un ou plusieurs métaux du groupe du fer, de l'aluminium et du zinc.

9. Procédé selon une ou plusieurs des revendications 1 à 8, caractérisé en ce qu'on utilise l'agent réducteur en quantité telle que, dans la solution de sulfate de titanyle, la teneur en titane-III soit de 0,1 à 4 g/l, de préférence de 0,5 à 2,0 g/l, exprimée en TiO₂.
